# EUROPÄISCHE PATENTANMELDUNG

(11) **EP 3 878 521 A1**
(43) Veröffentlichungstag der Anmeldung: **15.09.2021**
(21) Anmeldenummer: 21161523.2
(22) Anmeldetag: 09.03.2021
(51) Int. Cl.: A62B 3/00, B25H 3/00

(54) **MOBILES RETTUNGSGERÄT, SOWIE COMPUTERIMPLEMENTIERTES VERFAHREN ZUR DIEBSTAHLSICHERUNG DES MOBILEN RETTUNGSGERÄTES**

(30) Priorität: 10.03.2020 AT 501982020
(71) Anmelder: Weber-Hydraulik GmbH, 4460 Losenstein (AT)
(72) Erfinder: ALLINGER, Patrick, 4400 Steyr (AT); DIEKMANN, Hanno, 71665 Vaihingen/Enz (DE); EDER, Josef, 4521 Schiedlberg (AT)
(74) Vertreter: Burger, Hannes

(57) **Zusammenfassung**

Die Erfindung betrifft mobiles Rettungsgerät (2), insbesondere Spreizgerät, Schneidgerät oder Kombigerät mit Schneid- sowie Spreizfunktion, umfassend:
- Einen Grundkörper (4),
- Ein am Grundkörper (4) angeordnetes Arbeitsmittel (6).

Am mobilen Rettungsgerät (2) ist ein Deaktivierungsmittel (18) ausgebildet, welches zum Deaktivieren des Arbeitsmittels (6) im Diebstahlfall dient.

## Beschreibung

Die Erfindung betrifft ein mobiles Rettungsgerät, sowie ein computerimplementiertes Verfahren zur Diebstahlsicherung des mobilen Rettungsgerätes.

Aus der AT 520046 A1 ist ein gattungsgemäßes mobiles Rettungsgerät bekannt. An derartige Rettungsgeräte wird die Anforderung gestellt, dass sie einen robusten und somit einfachen Aufbau aufweisen müssen, und hohe Kräfte aufbringen müssen, um diverse Materialien plastisch verformen zu können. Dies führt dazu, dass das mobile Rettungsgerät nicht nur für die vorgesehenen Rettungszwecke verwendet wird, sondern immer öfter auch für kriminelle Zwecke verwendet wird. Da derartige mobile Rettungsgeräte für Privatpersonen nicht oder nur erschwert erwerblich sind, kommt es daher immer öfter vor, dass mobile Rettungsgeräte von Einsatzorganisationen, vor allem von Feuerwehren, gestohlen werden. Mit diesen gestohlenen mobilen Rettungsgeräten werden anschließend oft Bankautomaten oder Türen aufgebrochen.

Aufgabe der vorliegenden Erfindung war es, das Verwenden des mobilen Rettungsgerätes für kriminelle Zwecke weitestgehend zu unterbinden.

Diese Aufgabe wird durch eine Vorrichtung und ein Verfahren gemäß den Ansprüchen gelöst.

Erfindungsgemäß ist ein mobiles Rettungsgerät, insbesondere Spreizgerät, Schneidgerät oder Kombigerät mit Schneid- sowie Spreizfunktion, ausgebildet. Das mobile Rettungsgerät umfasst:
- Einen Grundkörper,
- Ein am Grundkörper angeordnetes Arbeitsmittel.

Weiters ist am mobilen Rettungsgerät ein Deaktivierungsmittel ausgebildet, welches zum Deaktivieren des Arbeitsmittels im Diebstahlfall dient.

Das erfindungsgemäße Rettungsgerät bringt den Vorteil mit sich, dass durch das Deaktivierungsmittel die Funktionalität des mobilen Rettungsgerätes außer Kraft gesetzt werden kann, wodurch eine missbräuchliche Verwendung des mobilen Rettungsgerätes unterbunden werden kann.

Ferner kann vorgesehen sein, dass am mobilen Rettungsgerät ein Positionserfassungsmittel ausgebildet ist. Dies bringt den Vorteil mit sich, dass mittels des Positionserfassungsmittels die Position des Rettungsgerätes erfasst werden kann, wodurch entweder bei Verlassen eines vordefinierten Bewegungsradius eine bestimmte Aktion gesetzt werden kann und/oder der aktuelle Standort des mobilen Rettungsgerätes abgefragt werden kann. Somit kann im Falle eines Diebstahls des mobilen Rettungsgerätes ein missbräuchlicher Einsatz weitestgehend unterbunden werden.

Weiters kann es zweckmäßig sein, wenn das Positionserfassungsmittel an eine Positionssendeeinheit gekoppelt ist, welche zum Senden eines mittels des Positionserfassungsmittels erfassten Positionssignals an ein Empfangsgerät ausgebildet ist. Durch diese Maßnahme kann das vom Positionserfassungsmittel erfasste Positionssignal an das Empfangsgerät übermittelt werden, wodurch am Empfangsgerät die aktuelle Position des mobilen Rettungsgerätes angezeigt werden kann und somit entsprechende Aktionen zur Wiederbeschaffung des mobilen Rettungsgerätes oder zum Außerstand setzen des mobilen Rettungsgerätes getroffen werden können.

Ferner kann vorgesehen sein, dass das Positionserfassungsmittel und/oder das Deaktivierungsmittel und/oder die Positionssendeeinheit innerhalb des Grundkörpers verbaut ist und nicht ohne die Verwendung eines Werkzeuges zugänglich ist. Dies bringt den Vorteil mit sich, dass im Falle des Diebstahles des mobilen Rettungsgerätes das Positionserfassungsmittel und/oder das Deaktivierungsmittel und/oder die Positionssendeeinheit nicht einfach aufgefunden werden kann und darüber hinaus auch nicht einfach aus dem mobilen Rettungsgerät entfernt werden kann. Somit kann insbesondere für unerfahrene Diebe verhindert werden, dass die Deaktivierungsfunktion oder die Ortungsfunktion für das mobile Rettungsgerät außer Stand gesetzt werden kann.

Darüber hinaus kann vorgesehen sein, dass das Positionserfassungsmittel an einen Positionserfassungsmittelenergiespeicher gekoppelt ist, welcher mit einem Hauptenergiespeicher, gekoppelt ist, wobei der Hauptenergiespeicher zur Bereitstellung der Antriebsenergie für die Arbeitsmittel dient. Durch diese Maßnahme kann erreicht werden, dass das Positionserfassungsmittel ständig mit ausreichend Energie versorgt werden kann, wobei bei einem Laden des Hauptenergiespeichers auch der Positionserfassungsmittelenergiespeicher automatisch mit geladen wird. Wird im Falle eines Diebstahls des mobilen Rettungsgerätes der Hauptenergiespeicher entfernt, so kann der Positionserfassungsmittelenergiespeicher dafür sorgen, dass das Positionserfassungsmittel bzw. eine etwaige zugehörige Sendeeinheit noch mit ausreichend Energie versorgt werden kann, um für eine bestimmte Zeitdauer, vorzugsweise mehrere Tage, ein Positionssignal des mobilen Rettungsgerätes an ein Empfangsgerät zu übermitteln.

Vorteilhaft ist auch eine Ausprägung, gemäß welcher vorgesehen sein kann, dass das Deaktivierungsmittel mit einem Freigabeempfänger gekoppelt ist, welcher von einem zentralen Server ansteuerbar ist. Durch diese Maßnahme kann das mobile Rettungsgerät von einem zentralen Alarmserver aus aktiviert werden, sodass die Funktionalität des mobilen Rettungsgerätes nur dann zur Verfügung steht, wenn tatsächlich ein Einsatz oder eine Übung ausgegeben wird. Durch diese Maßnahme kann auch eine missbräuchliche Verwendung des mobilen Rettungsgerätes innerhalb des regulären Einsatzgebietes unterbunden werden.

Weiters kann vorgesehen sein, dass das Deaktivierungsmittel mit einem Anzeigemittel, wie etwa einem Display, gekoppelt ist, sodass am Anzeigemittel die fehlende Funktionalität der Arbeitsmittel angezeigt werden kann. Dies bringt zum einen den Vorteil mit sich, dass Diebe das mobile Rettungsgerät bei Erkennen dieser Anzeige zurücklassen und somit das mobile Rettungsgerät an dem Zurücklassungsort auffindbar und von den Einsatzkräften wieder verwendbar ist. Darüber hinaus kann das Anzeigemittel dazu dienen, um Rettungskräften zu signalisieren, dass vor dem Durchführen eines Einsatzes zuerst die Funktionalität der Arbeitsmittel wieder freigeschalten werden muss.

Gemäß einer besonderen Ausprägung ist es möglich, dass ein Bewegungssensor ausgebildet ist, mittels welchem das Positionserfassungsmittel und/oder die Sendeeinheit aktivierbar ist. Durch diese Maßnahme kann das Positionserfassungsmittel und/oder die Sendeeinheit in einen Ruhezustand versetzt werden, sodass bei einer alltäglichen Aufbewahrung des mobilen Rettungsgerätes in einem Einsatzfahrzeug oder in einer Einsatzzentrale der Stromverbrauch möglichst geringgehalten werden kann. Erst wenn das mobile Rettungsgerät bewegt wird, wird das Positionserfassungsmittel und/oder die Sendeeinheit aktiviert, was zu einem erhöhten Stromverbrauch führt.

Erfindungsgemäß ist ein Verfahren zur Diebstahlsicherung eines mobilen Rettungsgerätes, insbesondere Spreizgerät, Schneidgerät oder Kombigerät mit Schneid- sowie Spreizfunktion, mit einem Grundkörper und einem am Grundkörper angeordneten Arbeitsmittel vorgesehen. In einem Verfahrens schritt eines Diebstahlszenarios kann die Funktionalität des Arbeitsmittels des mobilen Rettungsgerätes mittels eines Deaktivierungsmittels außer Kraft gesetzt werden.

Das erfindungsgemäße Verfahren bringt den Vorteil mit sich, dass durch den Verfahrensschritt eines Diebstahlszenarios in dem die Funktionalität des Arbeitsmittels des mobilen Rettungsgerätes mittels eines Deaktivierungsmittels außer Kraft gesetzt werden kann, eine missbräuchliche Verwendung des mobilen Rettungsgerätes unterbunden werden kann.

Darüber hinaus kann vorgesehen sein, dass im Diebstahlszenario mittels eines Positionserfassungsmittels Positionsdaten zum aktuellen Standort des mobilen Rettungsgerätes erfasst werden. Dies bringt den Vorteil mit sich, dass im Diebstahlsszenario das mobile Rettungsgerät zumindest geräteintern seine Positionsdaten zur Verfügung hat, um beispielsweise auf Basis der Positionsdaten die Funktionalität des Arbeitsmittels außer Kraft setzen zu können. Darüber hinaus kann im Diebstahlszenario mittels des Positionserfassungsmittels das mobile Rettungsgerät geortet werden, wodurch es vereinfacht wieder aufgefunden und zurückgeholt werden kann.

Weiters kann vorgesehen sein, dass das Diebstahlszenario aktiviert wird, wenn vom Positionserfassungsmittel erfasst wird, dass das mobile Rettungsgerät außerhalb von vordefinierbaren Bewegungsgrenzen bewegt wird und die Funktionalität des Arbeitsmittels automatisiert außer Kraft gesetzt wird. Dies bringt den Vorteil mit sich, dass ohne zusätzlichen Eingriff einer Überwachungsperson oder einer Bedienperson die Funktionalität des Arbeitsmittels und somit die Funktionalität des mobilen Rettungsgerätes außer Kraft gesetzt wird, um unmittelbar und ohne zeitlicher Verzögerung eine missbräuchliche Verwendung des mobilen Rettungsgerätes zu verhindern.

In einer Alternativvariante kann vorgesehen sein, dass mittels eines externen Zusatzeingabemittels ein Deaktivierungsbefehl an das Deaktivierungsmittel übermittelt wird, um die Funktionalität des Arbeitsmittels im Diebstahlszenario außer Kraft zu setzen. Dies bringt den Vorteil mit sich, dass es einer bewussten Eingabe durch eine Bedienperson bedarf, um die Funktionalität des Arbeitsmittels außer Kraft zu setzen, wodurch verhindert werden kann, dass durch einen Softwarefehler die Funktionalität des Arbeitsmittels automatisiert außer Kraft gesetzt werden würde.

Entsprechend einer vorteilhaften Weiterbildung kann vorgesehen sein, dass mittels eines externen Zusatzeingabemittels ein Aktivierungsbefehl an das Deaktivierungsmittel übermittelt wird, um die Funktionalität des Arbeitsmittels nach dem Beenden des Diebstahlszenarios wieder zu reaktivieren. Durch diese Maßnahme kann das mobile Rettungsgerät nach dem Diebstahl wieder seiner bestimmungsgemäßen Verwendung zugeführt werden.

Insbesondere kann es vorteilhaft sein, wenn zur Reaktivierung der Funktionalität des Arbeitsmittels ein elektronischer Schlüssel, wie etwa die Eingabe eines Codes, notwendig ist. Dies bringt den Vorteil mit sich, dass die Funktionalität des Arbeitsmittels nicht durch den Dieb selbst reaktiviert werden kann.

Ferner kann vorgesehen sein, dass beim Aktivieren des Diebstahlszenarios automatisiert eine Benachrichtigung an ein Empfangsgerät übermittelt wird. Dies bringt den Vorteil mit sich, dass der Besitzer oder der Träger des Empfangsgerätes, etwa eine funktionstragende Person der Einsatzorganisation über den Diebstahl informiert wird und somit beispielsweise den Diebstahl anzeigen kann und darüber hinaus darüber informiert ist, dass das mobile Rettungsgerät für etwaige Einsätze nicht zur Verfügung steht.

Darüber hinaus kann vorgesehen sein, dass beim Aktivieren des Diebstahlszenarios automatisiert die Positionsdaten zum aktuellen Standort des mobilen Rettungsgerätes an ein Empfangsgerät übermittelt werden. Durch diese Maßnahme kann der genaue Standort des gestohlenen mobilen Rettungsgerätes eruiert werden.

Vorteilhaft ist auch eine Ausprägung, gemäß welcher vorgesehen sein kann, dass beim Aktivieren des Diebstahlszenarios vom mobilen Rettungsgerät ein optisches und/oder akustisches Signal abgegeben wird. Dies bringt den Vorteil mit sich, dass ein etwaiger Dieb darüber informiert ist, dass das mobile Rettungsgerät mit einem Diebstahlschutz ausgestattet ist, was im besten Fall dazu führt, dass das mobile Rettungsgerät noch am Ort des Diebstahls zurückgelassen wird und somit für die Einsatzkräfte weiterhin zur Verfügung steht. Insbesondere ist es denkbar, dass das akustische Signal so laut ist, dass dieses wie eine Alarmanlage wirkt und es einem Dieb unmöglich macht, ohne die Aufmerksamkeit auf sich zu ziehen, eine Straftat mit dem mobilen Rettungsgerät zu begehen.

Ein elektronischer Schlüssel im Sinne dieses Dokumentes kann ein Code sein, welcher in ein direkt am mobilen Rettungsgerät angeordnetes Eingabeterminal oder in ein am externen Zusatzeingabemittel angeordnetes Eingabeterminal eingegeben wird. Ein elektronischer Schlüssel kann drüber hinaus in Form eines physischen Objektes, wie etwa ein RFID-Chip oder ein Smartphone beispielsweise mit NFC-Funktionalität, ausgebildet sein.

Als Diebstahlsicherung im Sinne dieses Dokumentes kann nicht nur die Sicherung des mobilen Rettungsgerätes gegen Diebstahl, sondern auch die Sicherung des mobilen Rettungsgerätes gegen Verwendung im Falle eines bereits erfolgten Diebstahls verstanden werden.

Um die eingangs genannte Problematik des Diebstahls der mobilen Rettungsgeräte bzw. der missbräuchlichen Verwendung der mobilen Rettungsgeräte bestmöglich einzudämmen, gibt es zusammenfassend folgende Lösungsansätze.

Ein erster Lösungsansatz ist eine frühzeitige Erkennung des Diebstahls durch ein am mobilen Rettungsgerät angeordnetes GPS, welches das GPS-Signal an ein vordefinierbares Empfangsgerät übermittelt.

Ein weiterer Lösungsansatz ist das Ausstatten des mobilen Rettungsgerätes mit einer Überwachung per WLAN. Somit kann ein in einer Feuerwehrzentrale vorhandenes WLAN Netz genutzt werden, mit welchem das mobile Rettungsgerät gekoppelt ist. Wenn das mobile Rettungsgerät ohne dem vorherigen Auslösen eines Einsatzes oder ohne dem vorherigen Auslösen eines Übungsszenarios aus dem WLAN-Netz entnommen wird bzw. vorm WLAN-Netz entfernt wird, kann dies als Diebstahlfall erkannt werden und somit ein Diebstahlszenario aktiviert werden. Auf diesem Lösungsansatz basierend kann natürlich auch ein sonstiges Mittel, wie etwa ein RFID-Chip, ein Bewegungssensor oder ein speziell ausgebildetes Ladekabel dazu verwendet werden, um erkennen zu können, wenn das mobile Rettungsgerät aus seiner Aufbewahrungsposition entnommen wird.

Im Diebstahlfall kann das mobile Rettungsgerät, insbesondere das Arbeitsmittel des mobilen Rettungsgerätes mittels eines Deaktivierungsmittels deaktiviert werden, sodass das mobile Rettungsgerät nicht zum Begehen einer strafbaren Handlung zur Verfügung steht.

Zusätzlich kann durch eine fortlaufende Standortübermittlung des mobilen Rettungsgerätes, welches durch ein Positionssignal erfolgt, welches mit einem Positionserfassungsmittel erfasst wird und an das Empfangsgerät übermittelt wird. Dies erleichtert eine Fahndung durch die Polizei.

Die obig beschriebenen Merkmale und Funktionen des mobilen Rettungsgerätes können bei einem neuen Rettungsgerät in dieses integriert sein und somit von Beginn an zur Verfügung stehen.

Weiters ist es auch denkbar, dass die obig beschriebenen Merkmale und Funktionen bei bereits ausgelieferten und am Markt befindlichen mobilen Rettungsgeräten nachgerüstet werden. Hierbei ist es denkbar, dass ein baulich eigenständiges Diebstahlmodul ausgebildet ist, in welchem das Deaktivierungsmittel und/oder das Positionserfassungsmittel und/oder die Sendeeinheit angeordnet ist.

Weiters ist es auch denkbar, dass das mobile Rettungsgerät über eine Datenschnittstelle, wie etwa Mobilfunk oder WLAN, mit dem Internet verbunden ist, wobei über ein Online-Portal diverse Einstellungen, wie etwa Festlegen des üblichen Bewegungsbereiches des mobilen Rettungsgerätes, Aktivierung oder Deaktivierung des Arbeitsmittels des mobilen Rettungsgerätes und dergleichen, vorgenommen werden können.

Insbesondere kann vorgesehen sein, dass der Besitzer des mobilen Rettungsgerätes dieses über ein Online-Portal registriert und dort autorisierte Nutzer angelegt werden. Bei einem Diebstahl des mobilen Rettungsgerätes können diese autorisierten Nutzer automatisiert eine Benachrichtigung an ein Empfangsgerät erhalten. Dies kann beispielsweise eine Mail, eine Push-Nachricht, eine SMS, eine Whatsapp-Nachricht, ein Anruf, eine Alarmierung auf einem Pager und dergleichen sein.

Wenn nun das mobile Rettungsgerät diesen vordefinierten Aktionsradius verlässt, kann eine entsprechende Nachricht an die im Portal hinterlegten autorisierten Nutzer übermittelt werden. Zusätzlich kann entweder automatisiert oder durch einen der autorisierten Nutzer die Funktionalität des Arbeitsmittels gesperrt werden. Weiters kann die aktuelle Position des mobilen Rettungsgerätes beispielsweise ebenfalls über das Online-Portal angezeigt bzw. verfolgt werden.

Zur zusätzlichen Absicherung ist es auch denkbar, dass das Diebstahlszenario aktiviert wird und somit die Funktionalität des Arbeitsmittels deaktiviert wird, wenn versucht wird das Deaktivierungsmittel bzw. das Positionserfassungsmittel vom mobilen Rettungsgerät zu entfernen. Dies kann beispielsweise beim Lösen einer Kabelverbindung zur Stromversorgung dieser Geräte erfolgen. Weiters ist es auch denkbar, dass das Diebstahlszenario aktiviert wird, wenn das mobile Rettungsgerät über einen voreinstellbaren Zeitraum keine Mobilfunkverbindung aufweist.

Ein mobiles Rettungsgerät im Sinne dieses Dokumentes ist ein elektromechanisches oder elektrohydraulisches Arbeitsgerät für den portablen Rettungs-Einsatz wie z.B. ein Spreizgerät, Schneidgerät oder Kombigerät mit Schneid- sowie Spreizfunktion oder ein Hebezylinder (bzw. Rettungszylinder). Derartige Rettungsgeräte dienen vorzugsweise Rettungsorganisationen mit Bergetätigkeiten, wie etwa der Feuerwehr zur Unterstützung bei ihren Bergeeinsätzen, um etwa verletzte Personen aus verunfallen Fahrzeugen zu bergen. Die Rettungsgeräte können natürlich ebenso bei Bergeeinsätzen oder Sicherungseinsätzen in Gebäuden eingesetzt werden.

Weiters ist es auch denkbar, dass ein derartiges Rettungsgerät beispielsweise von der Polizei oder von einem Sondereinsatzkommando oder auch dem Militär eingesetzt wird, um etwa Wohnungstüren zu öffnen.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel eines Rettungssystems mit einem mobilen Rettungsgerät;
- Fig. 2: eine schematische Darstellung der einzelnen Bauteile des mobilen Rettungsgerätes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

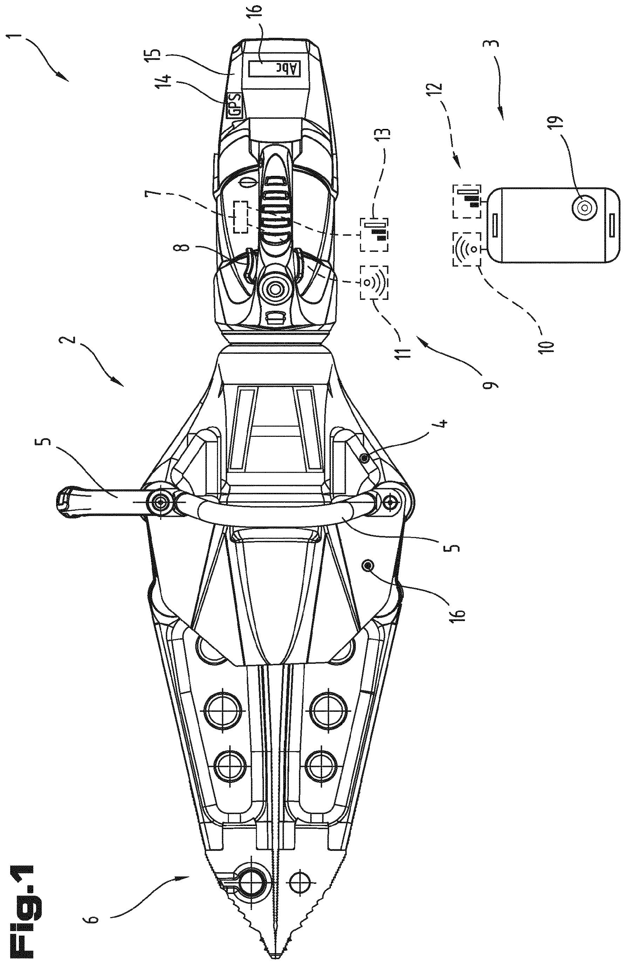

Fig. 1 zeigt ein erstes Ausführungsbeispiel eines Rettungssystems 1 mit einem mobilen Rettungsgerät 2 und einem externen Zusatzeingabemittel 3. Das mobile Rettungsgerät 2 umfasst einen Grundkörper 4 an welchem ein Haltegriff 5 angeordnet sein kann und an welchem Arbeitsmittel 6 angeordnet sind, die zur Manipulation im Rettungseinsatz dienen. Darüber hinaus umfasst das mobile Rettungsgerät 2 eine Steuerung 7, welche mit einem Eingabemittel 8 gekoppelt ist. Mittels der Steuerung 7 werden Steuerbefehle, welche durch einen Gerätebediener mittels des Eingabemittels 8 eingegeben werden, in entsprechende Signale umgewandelt um die Arbeitsmittel 6 des mobilen Rettungsgerätes 2 bewegen zu können.

Das mobile Rettungsgerät 2 umfasst darüber hinaus einen Hauptenergiespeicher 15, beispielsweise in Form eines Akkus, und eine Antriebseinheit, beispielsweise in Form eines Elektromotors.

Das mobile Rettungsgerät 2 des vorliegenden Ausführungsbeispiels ist in Form eines mobilen mit Akku betriebenen Rettungsgeräts ausgebildet. In einer weiteren, nicht dargestellten Ausführungsvariante ist es natürlich auch denkbar, dass das mobile Rettungsgerät 2 einen Grundkörper 4 aufweist, welcher beispielsweise mittels eines Hydraulikschlauches mit einer externen Antriebseinheit gekoppelt ist.

Das Rettungssystem 1 umfasst darüber hinaus ein Datenübertragungsmittel 9, mittels welchem Daten vom externen Zusatzeingabegerät 3 auf die Steuerung 7 des mobilen Rettungsgerätes 2 übertragen werden können. Das Datenübertragungsmittel 9 kann wie im vorliegenden Ausführungsbeispiel nach Fig. 1 ersichtlich, als drahtloses Datenübertragungsmittel 9 ausgebildet sein. In einer alternativen, nicht dargestellten Ausführungsvariante ist es natürlich auch denkbar, dass das externe Zusatzeingabemittel 3 mittels eines kabelgebundenen Datenübertragungsmittels 9 mit dem mobilen Rettungsgerät 2 gekoppelt ist.

Wie aus Fig. 1 weiters ersichtlich, kann vorgesehen sein, dass das Datenübertragungsmittel 9 eine erste Sendeeinheit 10 aufweist, welche mit dem externen Zusatzeingabemittel 3 gekoppelt ist. Weiters kann das Datenübertragungsmittel 9 eine erste Empfangseinheit 11 aufweisen, welche mit der Steuerung 7 des mobilen Rettungsgerätes 2 gekoppelt ist. Analog dazu kann eine zweite Sendeeinheit 12 ausgebildet sein, welche mit dem externen Zusatzeingabemittel 3 gekoppelt ist und mit einer zweiten Empfangseinheit 13 zusammenwirkt, welche mit der Steuerung 7 des mobilen Rettungsgerätes 2 gekoppelt ist.

Da die Datenübertragung nicht nur in eine Richtung, sondern bidirektional erfolgen kann, ist es natürlich auch denkbar, dass die Sendeeinheiten 10, 12 Datenpakete empfangen, welche von den Empfangseinheiten 11, 13 abgesandt werden. Darüber hinaus kann vorgesehen sein, dass das mobile Rettungsgerät 2 ein globales Positionserfassungsmittel 14 aufweist, mittels welchem die geografische Position des mobilen Rettungsgerätes 2 erfasst werden kann. Darüber hinaus kann vorgesehen sein, dass das Positionserfassungsmittel 14 an einen Positionserfassungsmittelenergiespeicher 21 gekoppelt ist. Weiters kann Positionserfassungsmittelenergiespeicher 21 mit dem Hauptenergiespeicher 15 gekoppelt sein.

Weiters ist es auch denkbar, dass das mobile Rettungsgerät 2 eine Informationsanzeige 16 aufweist. Die Informationsanzeige 16 kann beispielsweise am Grundkörper 4 des mobilen Rettungsgerätes 2 angeordnet sein. Die Informationsanzeige 16 kann, wie aus Fig. 1 ersichtlich, in Form eines Displays ausgebildet sein, an welchem ein frei wählbarer Text angezeigt werden kann. Insbesondere ist es denkbar, dass an der Informationsanzeige ein vordefinierbarer Text angezeigt wird, wenn das mobile Rettungsgerät 2 gestohlen wird.

In einer alternativen Ausführungsvariante ist es auch denkbar, dass die Informationsanzeige 16 als einfaches Anzeigemittel ausgebildet ist, welches beispielsweise in Form eines Lichtes ausgebildet ist. Insbesondere ist hierbei denkbar, dass mittels des Lichtes ein optisches Signal gegeben wird, welches einen Dieb oder potentiellen Dieb abschrecken soll.

Zusätzlich kann mittels der Informationsanzeige 16 dem Bediener des mobilen Rettungsgerätes 2 beispielsweise der Zustand des Akkus oder sonstige Informationen angezeigt werden.

Wie aus der schematischen Darstellung nach Fig. 1 ersichtlich, kann vorgesehen sein, dass das externe Zusatzeingabemittel 3 in Form eines Tablets oder in Form eines Mobiltelefons ausgebildet ist. Bei einem eigens für diesen Zweck als externes Zusatzeingabemittel 3 ausgebildeten Gerätes ist es auch denkbar, dass dieses eigens ausgebildete Eingabetaster aufweist, welche zur Befehlseingabe in das externe Zusatzeingabemittel 3 dienen.

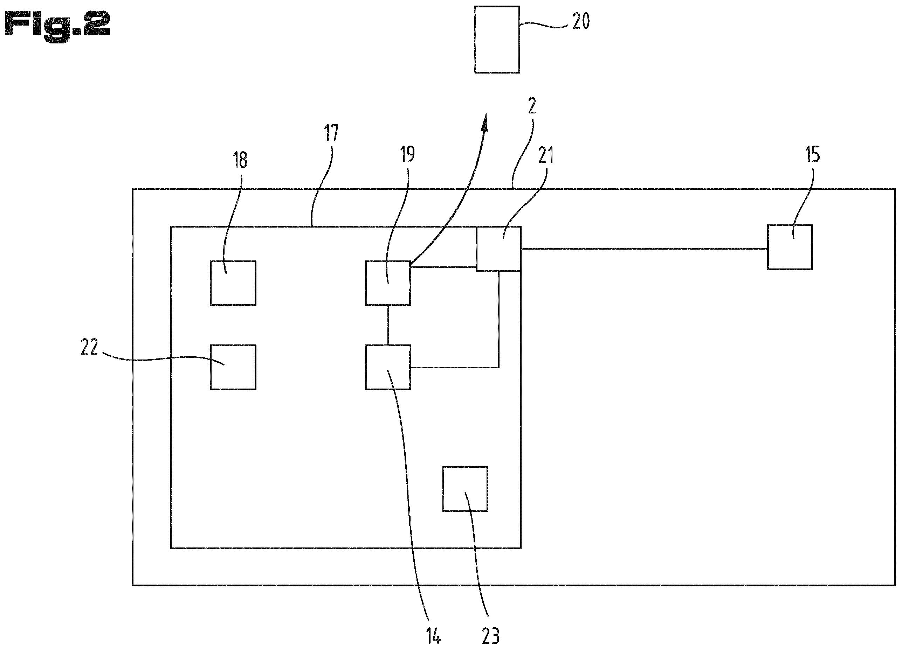

Fig. 2 zeigt eine schematische Darstellung des mobilen Rettungsgerätes 2 und dessen Zusammenhang mit für den Diebstahlschutz ausgebildeten Anbaugeräten. Wie aus Fig. 2 ersichtlich, kann vorgesehen sein, dass ein Diebstahlmodul 17 ausgebildet ist. Das Diebstahlmodul 17 kann als baulich eigenständig ausgebildetes Bauteil ausgebildet sein. In einer alternativen Ausführungsvariante kann auch vorgesehen sein, dass das Diebstahlmodul 17 beispielsweise in die Steuerung 7 des mobilen Rettungsgerätes 2 integriert ist.

Wie aus Fig. 2 weiters ersichtlich, kann vorgesehen sein, dass das Diebstahlmodul 17 ein Deaktivierungsmittel 18 umfasst, welches dazu ausgebildet ist, das Arbeitsmittel im Diebstahlfall zu deaktivieren. Weiters kann das Diebstahlmodul 17 eine Positionssendeeinheit 19 umfassen, welche zum Senden von Positionsdaten an ein Empfangsgerät 20 dient. Hierbei kann jegliche bekannte Datenübertragungstechnologie verwendet werden. Weiters ist es auch denkbar, dass das Empfangsgerät 20 kein mobiles Gerät, wie etwa ein Smartphone, Tablet, Laptop, Stand-PC oder dergleichen ist, sondern dass das Empfangsgerät 20 ein Dienst in einem Online-Portal ist.

Weiters kann vorgesehen sein, dass die Positionssendeeinheit 19 mit dem Positionserfassungsmittel 14 gekoppelt ist. Die Positionssendeeinheit 19 kann hierbei jede der dem Fachmann bekannten Sendetechnologien verwenden.

Weiters kann vorgesehen sein, dass das Positionserfassungsmittel 14 und/oder die Positionssendeeinheit 19 mit einem Positionserfassungsmittelenergiespeicher 21 gekoppelt ist. Darüber hinaus kann vorgesehen sein, dass das Diebstahlmodul 17 einen Bewegungssensor 22 umfasst, welcher zur Detektion einer Bewegung des mobilen Rettungsgerätes 2 dient.

Weiters kann vorgesehen sein, dass das Deaktivierungsmittel 18 mit einem Freigabeempfänger 23 gekoppelt ist, welcher von einem zentralen Server ansteuerbar ist. Mittels des Freigabeempfängers 23 kann das Deaktivierungsmittel 18 aktiv geschalten werden. Somit ist es denkbar, dass das Deaktivierungsmittel 18 im Regelfall aktiv ist und das Arbeitsmittel 6 somit nicht zur Verfügung steht. Im Einsatzfall kann beispielsweise direkt über den Alarmierungsserver das Deaktivierungsmittel 18 inaktiv geschalten werden, sodass die volle Funktionalität des mobilen Rettungsgerätes 2 zur Verfügung steht.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Rettungssystem
- 2: mobiles Rettungsgerät
- 3: externes Zusatzeingabemittel
- 4: Grundkörper
- 5: Haltegriff
- 6: Arbeitsmittel
- 7: Steuerung
- 8: Eingabemittel
- 9: Datenübertragungsmittel
- 10: erste Sendeeinheit
- 11: erste Empfangseinheit
- 12: zweite Sendeeinheit
- 13: zweite Empfangseinheit
- 14: globales Positionserfassungsmittel
- 15: Hauptenergiespeicher
- 16: Informationsanzeige
- 17: Diebstahlmodul
- 18: Deaktivierungsmittel
- 19: Positionssendeeinheit
- 20: Empfangsgerät
- 21: Positionserfassungsmittelenergiespeicher
- 22: Bewegungssensor
- 23: Freigabeempfänger

## Patentansprüche

1. Mobiles Rettungsgerät (2), insbesondere Spreizgerät, Schneidgerät oder Kombigerät mit Schneid- sowie Spreizfunktion, umfassend:
- Einen Grundkörper (4),
- Ein am Grundkörper (4) angeordnetes Arbeitsmittel (6);
**dadurch gekennzeichnet, dass**
am mobilen Rettungsgerät (2) ein Deaktivierungsmittel (18) ausgebildet ist, welches zum Deaktivieren des Arbeitsmittels (6) im Diebstahlfall dient.

2. Mobiles Rettungsgerät (2) nach Anspruch 1, **dadurch gekennzeichnet, dass** am mobilen Rettungsgerät (2) ein Positionserfassungsmittel (14) ausgebildet ist.

3. Mobiles Rettungsgerät (2) nach Anspruch 1, **dadurch gekennzeichnet, dass** das Positionserfassungsmittel (14) an eine Positionssendeeinheit (19) gekoppelt ist, welche zum Senden eines mittels des Positionserfassungsmittels (14) erfassten Positionssignals an ein Empfangsgerät (20) ausgebildet ist.

4. Mobiles Rettungsgerät (2) nach Anspruch 1 oder 2, **dadurch gekennzeichnet, dass** das Positionserfassungsmittel (14) und/oder das Deaktivierungsmittel (18) und/oder die Positionssendeeinheit (19) innerhalb des Grundkörpers (4) verbaut ist und nicht ohne die Verwendung eines Werkzeuges zugänglich ist.

5. Mobiles Rettungsgerät (2) nach einem der vorhergehenden Ansprüche, **dadurch gekennzeichnet, dass** das Positionserfassungsmittel (14) an einen Positionserfassungsmittelenergiespeicher (21) gekoppelt ist, welcher mit einem Hauptenergiespeicher (15), gekoppelt ist, wobei der Hauptenergiespeicher (15) zur Bereitstellung der Antriebsenergie für die Arbeitsmittel (6) dient.

6. Mobiles Rettungsgerät (2) nach einem der vorhergehenden Ansprüche, **dadurch gekennzeichnet, dass** das Deaktivierungsmittel (18) mit einem Freigabeempfänger (23) gekoppelt ist, welcher von einem zentralen Server ansteuerbar ist.

7. Mobiles Rettungsgerät (2) nach einem der vorhergehenden Ansprüche, **dadurch gekennzeichnet, dass** ein Bewegungssensor (22) ausgebildet ist, mittels welchem das Positionserfassungsmittel (14) und/oder die Sendeeinheit aktivierbar ist.

8. Verfahren zur Diebstahlsicherung eines mobilen Rettungsgerätes (2), insbesondere Spreizgerät, Schneidgerät oder Kombigerät mit Schneid- sowie Spreizfunktion, mit einem Grundkörper (4) und einem am Grundkörper (4) angeordneten Arbeitsmittel (6), **dadurch gekennzeichnet, dass** in einem Verfahrensschritt eines Diebstahlszenarios die Funktionalität des Arbeitsmittels (6) des mobilen Rettungsgerätes (2) mittels eines Deaktivierungsmittels (18) außer Kraft gesetzt werden kann.

9. Verfahren nach Anspruch 8, **dadurch gekennzeichnet, dass** im Diebstahlszenario mittels eines Positionserfassungsmittels (14) Positionsdaten zum aktuellen Standort des mobilen Rettungsgerätes (2) erfasst werden.

10. Verfahren nach Anspruch 8 oder 9, **dadurch gekennzeichnet, dass** das Diebstahlszenario aktiviert wird, wenn vom Positionserfassungsmittel (14) erfasst wird, dass das mobile Rettungsgerät (2) außerhalb von vordefinierbaren Bewegungsgrenzen bewegt wird und die Funktionalität des Arbeitsmittels (6) automatisiert außer Kraft gesetzt wird.

11. Verfahren nach einem der Ansprüche 8 bis 10, **dadurch gekennzeichnet, dass** mittels eines externen Zusatzeingabemittels (3) ein Deaktivierungsbefehl an das Deaktivierungsmittel (18) übermittelt wird, um die Funktionalität des Arbeitsmittels (6) im Diebstahlszenario außer Kraft zu setzen.

12. Verfahren nach einem der Ansprüche 8 bis 11, **dadurch gekennzeichnet, dass** mittels eines externen Zusatzeingabemittels (3) ein Aktivierungsbefehl an das Deaktivierungsmittel (18) übermittelt wird, um die Funktionalität des Arbeitsmittels (6) nach dem Beenden des Diebstahlszenarios wieder zu reaktivieren.

13. Verfahren nach Anspruch 11, **dadurch gekennzeichnet, dass** zur Reaktivierung der Funktionalität des Arbeitsmittels (6) ein elektronischer Schlüssel, wie etwa die Eingabe eines Codes, notwendig ist.

14. Verfahren nach einem der Ansprüche 8 bis 13, **dadurch gekennzeichnet, dass** beim Aktivieren des Diebstahlszenarios automatisiert eine Benachrichtigung an ein Empfangsgerät (20) übermittelt wird.

15. Verfahren nach einem der Ansprüche 8 bis 14, **dadurch gekennzeichnet, dass** beim Aktivieren des Diebstahlszenarios automatisiert die Positionsdaten zum aktuellen Standort des mobilen Rettungsgerätes (2) an ein Empfangsgerät (20) übermittelt werden.

16. Verfahren nach einem der Ansprüche 8 bis 15, **dadurch gekennzeichnet, dass** beim Aktivieren des Diebstahlszenarios vom mobilen Rettungsgerät (2) ein optisches und/oder akustisches Signal abgegeben wird.
